# EUROPÄISCHE PATENTSCHRIFT

(11) **EP 0 336 249 B1**
(45) Veröffentlichungstag und Bekanntmachung des Hinweises auf die Patenterteilung: **08.09.1993**
(21) Anmeldenummer: 89105362.1
(22) Anmeldetag: 25.03.1989
(51) Int. Cl.: B29C 45/17

(54) **Spritzgiessmaschine mit Schaltschrank und Eingabeeinheit**
Injection moulding machine with switch cabinet and input unit
Machine à mouler par injection à armoire de commande et unité d'entrée

(30) Priorität: 02.04.1988 DE 3811298; 31.12.1988 DE 3844434
(43) Veröffentlichungstag der Anmeldung: 11.10.1989
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- EP-A- 0 264 601
- DE-U- 8 717 272
- FR-A- 2 386 386
- FR-A- 2 561 163
- JAPAN PLASTICS AGE, Band 22, Nr. 198, Juli/August 1984, Seiten 31-35, Tokyo, JP; K. OMORI: "Energy saving and stable precision molding with M-A series injection molding machine"
- WERKSTATT UND BETRIEB, Band 115, Nr. 12, Dezember 1982, Seite 805, München, DE; "Vertikales Bearbeitungszentrum"
- JAPAN PLASTICS AGE, Band 18, Nr. 174, Juli/August 1980, Seiten 28-33, Tokyo, JP; K. NISHIZAWA: "Progress and application of injection process control"

## Beschreibung

Die Erfindung bezieht sich auf eine Spritzgießmaschine gemäß dem Oberbegriff des Patentanspruches 1.

Bei einer bekannten Spritzgießmaschine dieser Art ist eine aus Bildschirm und seitlich davon angeordneten Tastaturen bestehende Eingabeeinheit an einem Schwenkarm hängend angeordnet. Dabei ist der Schaltschrank jedoch nicht an der Spritzgießmaschine angebaut und steht neben der Spritzgießmaschine, so daß ein gemeinsames Bewegen von Schaltschrank, Eingabeeinheit und Spritzgießmaschine als bauliche Einheit nicht möglich ist. In dieser Anordnung befindet sich der Schaltschrank größtenteils in einer für das Wartungspersonal unangenehmen Arbeitshöhe. Direkt an der Spritzgießmaschine ist zusätzlich ein Handbedienfeld für direkte Steuerungseingriffe angeordnet, z.B. zur Unterbrechung des Programmablaufs zwecks Beseitigung von Störfällen. Die in Gebrauchsposition befindliche Eingabeeinheit stellt ein erhöhtes Risiko dar, da sie sich zwar in Augenhöhe, aber mit dem größten Teil ihrer Abmessungen außerhalb des Blickbereichs des Bedienungs- und Montagepersonals befindet. Dadurch besteht bei Arbeiten an der Maschine die Gefahr, daß die herausragende Eingabeeinheit in Vergessenheit gerät (DE-OS P 36 32 449.3).

Bei einer weiteren Spritzgießmaschine dieser Art ist das Datensichtgerät gemeinsam mit der Tastatur vom Computer der Spritzgießmaschine räumlich getrennt, der in einem rückseitig, im unteren Bereich der Maschine angeordneten Schaltschrank untergebracht ist. Dies ist gleichbedeutend mit einer Auflösung der üblichen, aus Schaltschrank, Datensichtgerät und Eingabetastatur bestehenden baulichen Einheit, was einen hermetischen Abschluß des Computers im Schaltschrank ermöglicht. Die aus Datensichtgerät und Eingabetastatur bestehende Eingabeeinheit ist von der Spritzgießmaschine gesondert (= getrennt) angeordnet und lediglich über ein Kabel mit dem Schaltschrank verbunden, der ebenfalls gesondert aufgestellt ist. Beim Bewegen, Versetzen und Transportieren der Spritzgießmaschine ist es daher erforderlich, den Schaltschrank wie auch die Eingabeeinheit gesondert zu bewegen, zu versetzen bzw. zu transportieren (Multi-Microprozessor-System mit Farbmonitor, Kunststoffe-Plastics 6/83, S. 22-24).

Ferner ist bekannt, Datensichtgerät, Eingabetastatur und Schaltschrank als bauliche Einheit seitlich von der Spritzgießmaschine im Bedienungsbereich aufzustellen, getrennt von einem zusätzlichen Handbedienfeld. Eine derartige Aufstellung des Schaltschrankes im Bedienungsbereich kann jedoch hinderlich sein. Überdies ist ein gemeinsames Bewegen von Schaltschrank und restlicher Spritzgießmaschine als Einheit nicht möglich (Kundenzeitschrift "Arburg heute" 22/84, S. 5).

Hiervon ausgehend liegt der Erfindung die Aufgabe zugrunde, eine bekannte Spritzgießmaschine dieser Art derart weiterzubilden, daß die prinzipiellen Voraussetzungen für ein Bewegen, Versetzen, Transportieren usw. von Eingabeeinheit, Schaltschrank und Spritzgießmaschine als eine raumsparende bauliche Einheit gegeben sind, ohne die Bedienungs- und Wartungsfreundlichkeit zu vernachlässigen.

Diese Aufgabe wird erfindungsgemäß durch die im Kennzeichen des Patentanspruches 1 genannten Merkmale gelöst.

Bei einer solchen Ausbildung stellen Spritzgießmaschine, Eingabeeinheit und Schaltschrank eine "Bewegungseinheit" dar. Insofern werden sämtliche Bewegungen, die während der Lebensdauer einer Spritzgießmaschine erforderlich sind, stark erleichtert. Solche Bewegungen sind sowohl beim Hersteller im Produktionsablauf, z.B. in der Bandstraße, beim Transport vom Herstellerbetrieb zum Kunden, z. B. in Containern oder auf Lastkraftwagen, als auch im Betrieb des Kunden, z.B. beim Umsetzen infolge veränderter Raumverhältnisse vielfach erforderlich. Durch die Anordnung von Schaltschrank und Eingabeeinheit in bereits durch die Außenabmessungen bestimmten Leerräumen ist der Platzbedarf der Bewegungseinheit minimiert. Überdies sind sämtliche Bauteile der Maschine derart angeordnet, daß sich ein ungefähr mittiger Schwerpunkt ergibt, so daß derartige Bewegungen erleichtert sind. Bei Bedarf kann die aus Datensichtgerät und Eingabetastatur bestehende Eingabeeinheit durch entsprechendes Verschwenken so angeordnet werden, daß jederzeit ein Überblick über die Eingabeeinheit gewährleistet ist. Bei sehr beengten Verhältnissen, z.B. beim Transport auf Lastkraftwagen, besteht dennoch die Möglichkeit, Eingabeeinheit oder Schaltschrank ohne größeren Montageaufwand abzunehmen und gesondert zu verstauen.

Treten an der Eingabeeinheit oder am Schaltschrank Störungen auf, so besteht die Möglichkeit, Eingabeeinheit oder Schaltschrank bei geringem Montageaufwand, also bei geringen Betriebsausfallzeiten, je als Einheit auszuwechseln. Diese Einheiten können auch bei der Fertigung jeweils für sich an Probemaschinen oder über Simulationen getestet werden, so daß sie als funktionsfähige Einheiten auch von ungeschultem Personal unter Bildung der "Bewegungseinheit" der Spritzgießmaschine zugeführt werden können. Durch all diese Maßnahmen können die Fertigungskosten erheblich reduziert werden.

Eingabeeinheit, Handbedienfeld und Schaltschrank befinden sich in einer sowohl für die Bedienung als auch für die Wartung der Steuerungseinrichtung angenehmen Arbeitshöhe, die das Arbeiten an der Spritzgießmaschine erheblich erleichtert. Auch können die erforderlichen Reinigungsarbeiten leichter durchgeführt werden, da weder der Schaltschrank noch die Eingabeeinheit eine Stellfläche auf dem Boden beanspruchen. Vor Betriebsbeginn werden über die Eingabetastatur alle notwendigen, den Programmablauf bestimmenden Daten eingegeben. Nach Programmstart kann die Eingabeeinheit in ihre Ruheposition verschwenkt werden, in der jederzeit durch einen Blick auf den Bildschirm die voreingestellten Daten überprüfbar sind. Über das Handbedienfeld können während des Betriebs jederzeit alle wichtigen Bedienungsfunktionen wie z.B. Eingriffe in das Programm, ausgeführt werden.

Bei einer solchen Ausbildung entsprechend dem Patentanspruch 3 benötigt die Eingabeeinheit selbst in Gebrauchsposition nur einen geringen, die Bewegungsfreiheit vor der Spritzgießmaschine behindernden Platzbedarf.

Bei einer Ausbildung entsprechend dem Patentanspruch 7 wird die Zugänglichkeit zum Motor und zum Tankraum der Spritzgießmaschine dadurch erleichtert, daß nach Abnahme der Spritzgießeinheit die Maschinenabdeckung ohne weitere Montagearbeiten abnehmbar ist.

Zudem kann bei einer Ausbildung entsprechend den Patentansprüchen 7 bis 8 der zwischen Eingabeeinheit und Schwenkarm befindliche Bereich sinnvoll als Ablagefach oder zur Unterbringung von elektronischen Bauteilen genutzt werden.

Nachstehend wird die Erfindung anhand der Zeichnung an einem Ausführungsbeispiel näher erläutert.

Es zeigen:

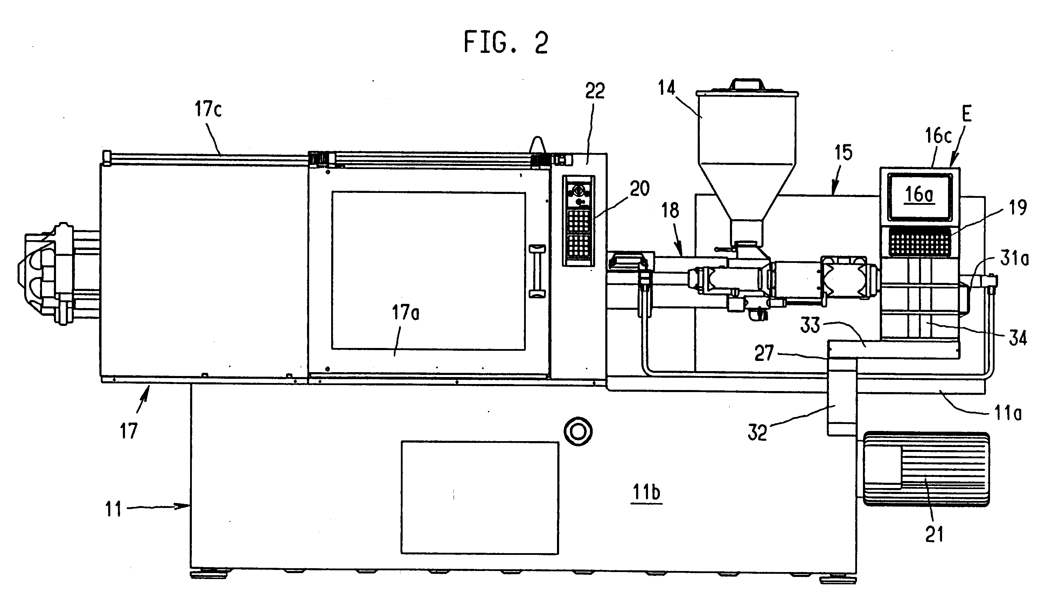

- Fig. 1,2: Die bedienungsseitige Ansicht der Spritzgießmaschine mit in Gebrauchsposition, bzw. in Ruheposition befindlicher Eingabeeinheit,
- Fig. 3,4: eine Draufsicht entsprechend den Figuren 1,2 mit in Gebrauchsposition bzw. in Ruheposition befindlicher Eingabeeinheit,

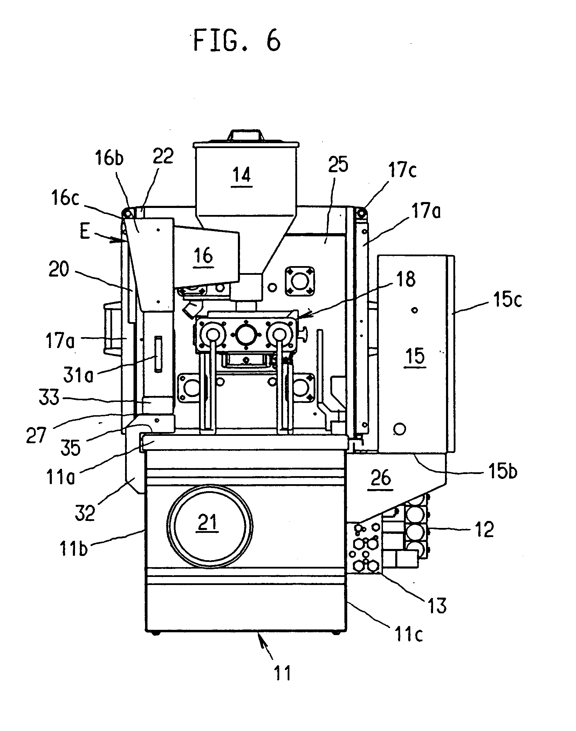

- Fig. 5,6: eine spritzgießseitige Stirnansicht entsprechend den Figuren 1,2 mit in Gebrauchsposition bzw. in Ruheposition befindlicher Eingabeeinheit, und
- Fig. 7: eine formschließseitige Stirnansicht entsprechend Fig. 1 mit in Gebrauchsposition befindlicher Eingabeeinheit.

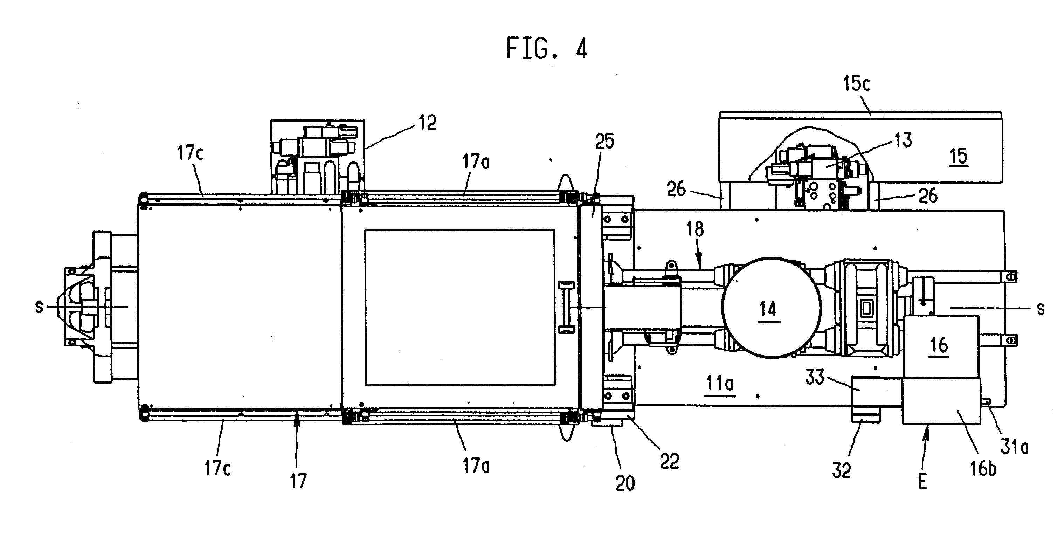

Die Kunststoff-Spritzgießmaschine besitzt einen quaderförmigen, aus Stahlblech gefertigten Maschinenfuß, auf welchem eine horizonal schließende Formschließeinheit 17 und eine Spritzgießeinheit 18 angeordnet sind und an welchem ein quaderförmiger Schaltschrank 15 rückseitig angebaut ist. Der im Schaltschrank untergebrachte Rechner der Spritzgießmaschine steht über wenigstens ein Kabel mit einer aus Datensichtgerät 16 und Eingabetastatur 19 bestehenden Eingabeeinheit E in Verbindung. Diese Eingabeeinheit ist vom Bedieungsplatz aus unmittelbar zugänglich. Die schwenkbar angeordnete Eingabeeinheit ist aus einer Gebrauchsposition in eine Ruheposition überführbar. In Gebrauchsposition befindet sich die Eingabeeinheit E außerhalb der Abdeckung 11a des Maschinenfußes 11, während sie in Ruheposition im wesentlichen über den Maschinenfuß geschwenkt ist. Der Schaltschrank 15 ist annähernd innerhalb des von den Außenabmessungen der Spritzgießmaschine vorgegebenen Raumes angeordnet. Dabei werden bestehende Leerräume zur Unterbringung von Schaltschrank 15 und Eingabeeinheit E ausgenutzt. Das Datensichtgerät 16 und die unter dem Datensichtgerät angeordnete Eingabetastatur 19 befinden sich in Augenhöhe einer Bedienungsperson. Der Bildschirm 16a des Datensichtgerätes 16 ist durch einen Blendschutz 16b gegen von oben einfallendes Licht geschützt. Die Eingabeeinheit E kann mittels eines an der Eingabeeinheit befestigten Griffes 31a von ihrer Ruheposition in ihre Gebrauchsposition überführt werden. Die Breite der Eingabeeinheit E entspricht ungefähr der Breite des Bildschirms 16a des Datensichtgerätes 16. Die in Ruheposition befindliche Eingabetastatur liegt parallel zu einem Handbedienfeld 20 für unmittelbare Steuereingriffe. Wie aus Fig. 4 ersichtlich, sind Handbedienfeld 20 sowie Eingabetastatur 19 und das Datensichtgerät 16 in Ruheposition parallel zur Symmetrieebene s-s der Spritzgießeinheit 18 angeordnet.

In dieser Ruheposition schließt die Oberkante 16c des Blendschutzes 16b des Bildschirmes 16a des Datensichtgerätes 16 etwa mit der durch die bedienungsseitigen Schutzschieber 17a der Formschließeinheit 17 gebildeten vertikalen Ebene ab. Die Schutzschieber 17a sind an Führungsschienen 17c geführt.

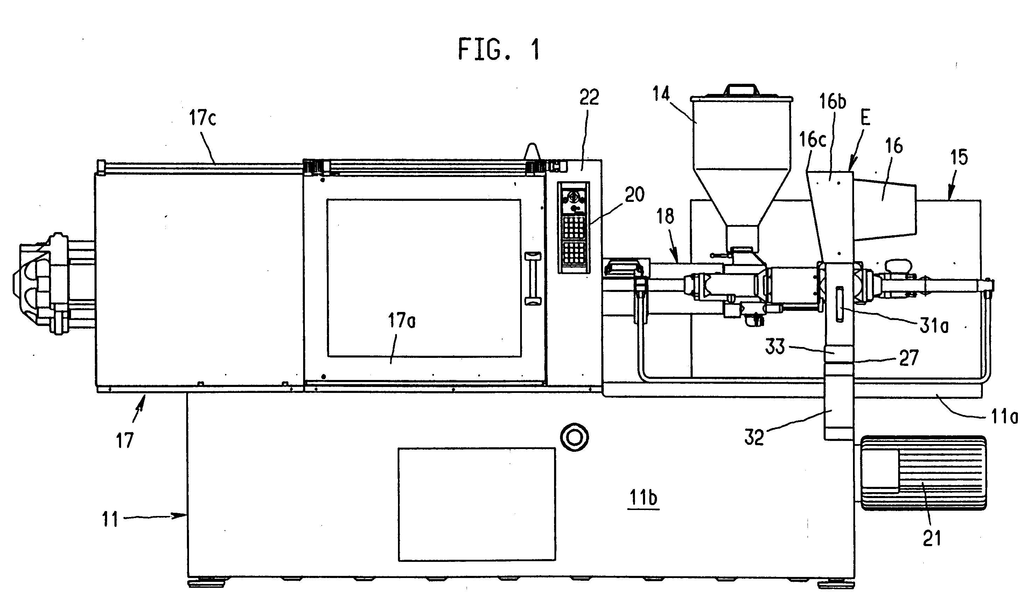

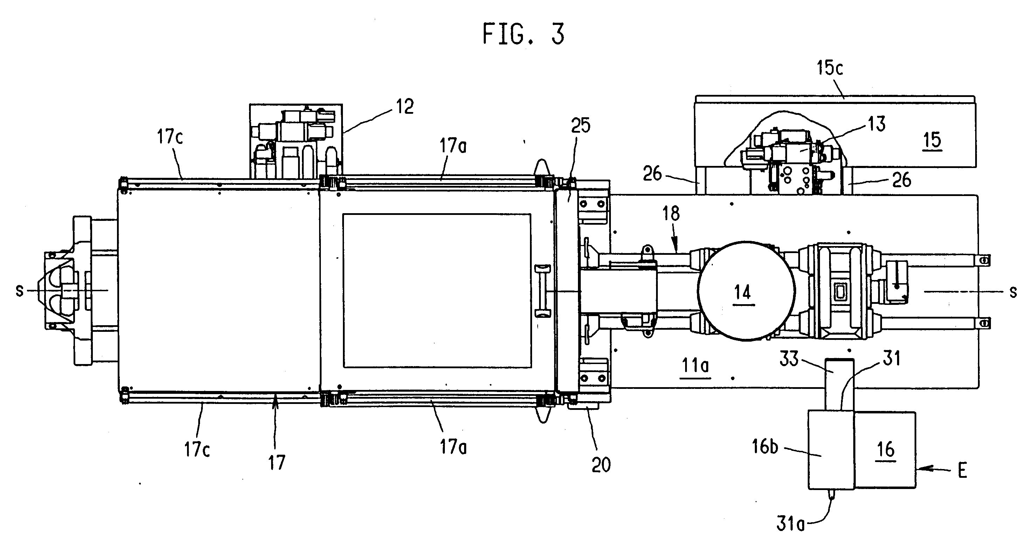

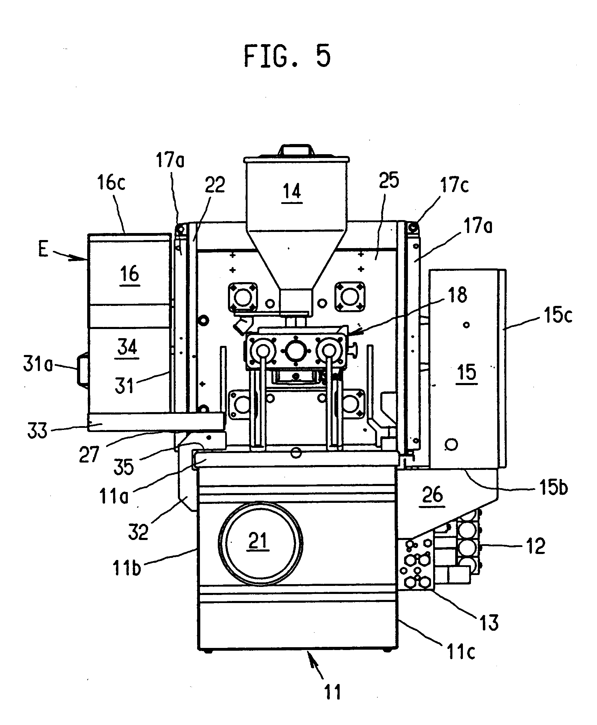

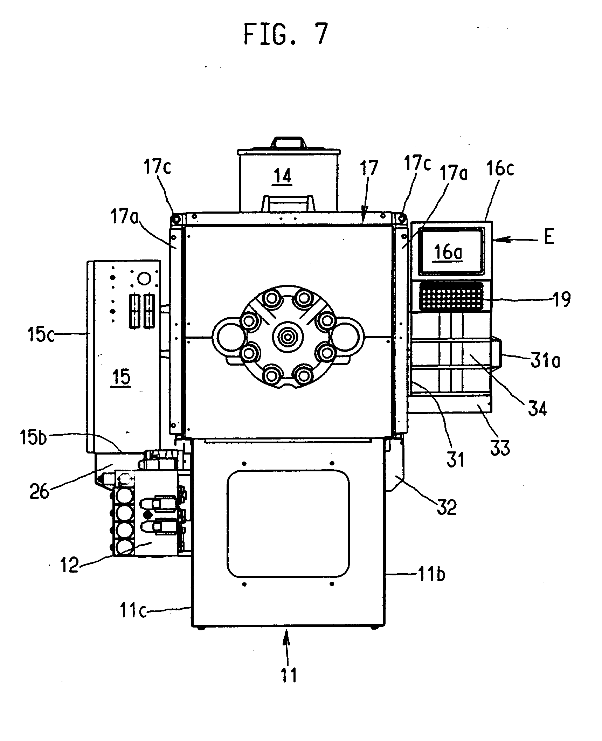

Wie aus den Fign. 1,3,5,7 ersichtlich, ist die um eine vertikale Achse schwenkbare Eingabeeinheit E in Gebrauchsposition senkrecht zur Symmetrieebene s-s der Spritzgießeinheit 18 angeordnet. Dabei liegt, wie insbesondere aus den Fign. 5 und 7 ersichtlich, die spritzgießseitige Abschlußfläche 31 der schwenkbaren Eingabeeinheit E etwa in der durch die bedienungsseitigen Schutzschieber 17a der Formschließeinheit 17 gebildeten vertikalen Ebene. Der Spritzgießeinheit 18 wird über eine Zuführeinrichtung 14 Kunststoff-Granulat zugeführt. Wie aus Fig. 1 in Verbindung mit Fig. 5 ersichtlich, ist die schwenkbare Eingabeeinheit E über ein Verbindungsstück 32 an der bedienungsseitigen Längswand 11b des Maschinenfußes 11 abgestützt und 'steht' über der Abdeckung 11a des Maschinenfußes 11. Ein die schwenkbare Eingabeeinheit E tragender Schwenkarm 33 ist über ein über der Abdeckung 11a des Maschinenfußes 11 angeordnetes Gelenk 27 mit dem Verbindungsstück verbunden. Dennoch ist es im Bedarfsfalle möglich, z.B. bei mangelnden Platzverhältnissen beim Transport auf einem Lastkraftwagen, die Eingabeeinheit gesondert von der Spritzgießmaschine abzunehmen. Eingabeeinheit E und die Eingabeeinheit auf ihrer gesamten Breite stützender Schwenkarm befinden sich in einem vertikalen Abstand, in dem ein der Breite des Bildschirms 16a entsprechender Raum zur Unterbringung von z.B. Ablagefächern 34 oder elektronischen Bauteilen vorgesehen ist.

Die Unterseite 15b des über den hydraulischen Verteilerblöcken 12,13 mittels zweier Halter 26 befestigten Schaltschrankes 15 liegt etwa in Höhe der Abdeckung des Maschinenfußes. Der Schaltschrank ist rückseitig über Türen 15c in einer für das Wartungspersonal angenehmen Arbeitshöhe zugänglich. Er befindet sich im Abstand zur rückwärtigen Längswand 11c des Maschinenfußes 11.

Die Hauptausdehnung des Schaltschrankes 15 ist parallel zur symmetrieebene s-s der Spritzgießeinheit 18 angeordnet. Er überragt jedoch die durch die hydraulischen Verteilerblöcke 12,13 vorbestimmten Außenabmessungen der Spritzgießmaschine nur geringfügig. Die Abdeckung 11a des Maschinenfußes 11, der Schaltschrank 15 und der Motor 21 der Spritzgießmaschine werden durch eine gemeinsame vertikale, die Spritzgießmaschine abschließende Ebene begrenzt. Das Handbedienfeld 20 ist auf einem Tastaturhalter 22 angeordnet. Durch seine zentrale Lage erlaubt es sofortige Eingriffe bei Betriebsstörungen der Maschine. An diesen Tastaturhalter und an den stationären Formträger 25 schließen die in Schutzposition befindlichen Schutztüren 17a der Formschließeinheit 17 an. Bei Störungen am Schaltschrank 15 oder an der Eingabeeinheit E ist es jederzeit möglich, die Eingabeeinheit E oder den Schaltschrank 15 getrennt auszutauschen. Da es sich dabei um vorgefertigte Teile handelt, können diese Tätigkeiten auch von ungeschultem Personal durchgeführt werden.

Schaltschrank 15, Eingabeeinheit E und Spritzgießmaschine bilden eine bauliche Einheit. Der die Eingabeeinheit E tragende Schwenkarm 33 ist über ein als Zapfen ausgebildetes Gelenk 27 mit dem Verbindungsstück 32 verbunden. Das zentral angeordnete Handbedienfeld 20 befindet sich am stationären Formträger. Der rückseitig angebaute Schaltschrank 15 befindet sich in einer für eine Wartungsperson angenehmen Arbeitshöhe.

Das Verbindungsstück 32 ist unter Wahrung eines Abstandes 35 Zur Abdeckung 11a des Maschinenfußes 11 angeordnet. Dieser Abstand 35 ermöglicht ein spritzgießseitiges Herausziehen der Abdeckung 11a ohne Abnahme der Eingabeeinheit E. Nach Abnahme der Abdeckung 11a des Maschinenfußes 11 sind die im Maschinenfußes angeordneten Teile der Maschine leicht zugänglich.

## Patentansprüche

1. Kunststoff-Spritzgießmaschine (Spritzgießmaschine) mit einem Maschinenfuß (11) mit Abdeckung (11a), auf welchem eine horizontal schließende Formschließeinheit (17) und eine Spritzgießeinheit (18) angeordnet sind,
mit einem Handbedienfeld (20) für unmittelbare Steuerungseingriffe,
mit einer aus einem Datensichtgerät (16) und einer Eingabetastatur (19) bestehenden Eingabeeinheit (E) auf der Bedienungsseite der Spritzgießmaschine, die über wenigstens ein Kabel mit einem Schaltschrank (15) verbunden ist, wobei die Eingabeeinheit (E) vom Bedienungsplatz aus unmittelbar zugänglich und einsehbar ist und wobei der Schaltschrank (15) auf der Rückseite der Spritzgießmaschine angeordnet ist,
dadurch gekennzeichnet, daß die Eingabeeinheit (E) bei etwa in Augenhöhe liegendem Datensichtgerät um eine vertikale, am Maschinenfuß abgestützte Achse aus einer Gebrauchsposition, in welcher sie sich außerhalb der Abdeckung (11a) des Maschinenfußes (11) befindet, in eine Ruheposition im wesentlichen über dem Maschinenfuß (11) überführbar ist und auf einem horizontalen Schwenkarm (33) dieser Achse stehend aufsitzt, und der Schaltschrank mit dem Maschinenfuß fest verbunden ist, wobei die Unterseite (15b) des Schaltschrankes (15) etwa in der durch die Abdeckung (11a) des Maschinenfußes (11) gebildeten Ebene und der Schaltschrank im wesentlichen innerhalb der Außenabmessungen der Spritzgießmaschine liegt.

2. Spritzgießmaschine nach Patentanspruch 1, dadurch gekennzeichnet, daß sich die Eingabeeinheit (E) auch in Ruheposition außerhalb der Stellfläche des Maschinenfußes befindet.

3. Spritzgießmaschine nach Patentanspruch 1 oder 2, dadurch gekennzeichnet, daß die Breite der Eingabeeinheit (E) ungefähr der Breite des Bildschirms (16a) des Datensichtgeräts (16) entspricht.

4. Spritzgießmaschine nach einem der vorhergehenden Patentansprüche, dadurch gekennzeichnet, daß die in Ruheposition befindliche Eingabetastatur (19) parallel zu dem im Bereich des stationären Formträgers (25) angeordneten Handbedienfeld (20) und daß Handbedienfeld (20) und die Eingabeeinheit (E) in Ruheposition parallel zur Symmetrieebene (s-s) der Spritzgießeinheit (18) angeordnet sind.

5. Spritzgießmaschine nach einem der vorhergehenden Patentansprüche, dadurch gekennzeichnet, daß die Oberkante (16c) des Blendschutzes (16b) des Bildschirms (16a) des Datensichtgerätes (16) bei in Ruheposition befindlicher Eingabeeinheit (E) etwa in der von den bedienungsseitigen Schutzschiebern (17a) der Formschließeinheit (17) gebildeten vertikalen Ebene liegt.

6. Spritzgießmaschine nach einem der vorhergehenden Patentansprüche, dadurch gekennzeichnet, daß die Eingabeeinheit (E) in Gebrauchsposition senkrecht zur Symmetrieebene (s-s) der Spritzgießeinheit (18) angeordnet ist, wobei die spritzgießseitige Abschlußfläche (31) der schwenkbaren Eingabeeinheit (E) etwa in der von den bedienungsseitigen Schutzschiebern (17a) der Formschließeinheit (17) gebildeten vertikalen Ebene liegt.

7. Spritzgießmaschine nach einem der vorhergehenden Patentansprüche, dadurch gekennzeichnet, daß die stehend angeordnete, schwenkbare Eingabeeinheit (E) über ein Verbindungsstück (32) am Abschluß der bedienungsseitigen Längswand (11b) an dieser abgestützt ist und daß der Schwenkarm (33) über ein über der Abdeckung (11a) des Maschinenfußes (11) angeordnetes, als Zapfen ausgebildetes Gelenk (27) mit dem Verbindungsstück (32) verbunden ist, welcher Zapfen die Drehachse bildet.

8. Spritzgießmaschine nach Patentanspruch 7, dadurch gekennzeichnet, daß zwischen der Eingabeeinheit (E) und dem die schwenkbare Eingabeeinheit (E) abstützenden Schwenkarm (33) ein vertikaler Abstand vorgesehen ist.

9. Spritzgießmaschine nach einem der vorhergehenden Patentansprüche, dadurch gekennzeichnet, daß die Unterseite (15b) des über den hydraulischen Verteilerblöcken (12,13) mittels zweier Halter (26) befestigten Schaltschrankes (15) in Höhe der Abdeckung (11a) des Maschinenfußes (11) liegt und daß der Schaltschrank (15) im Abstand zur rückwärtigen Längswand (11c) des Maschinenfußes (11) parallel zur Symmetrieebene (s-s) der Spritzgießeinheit (18) angeordnet ist und die durch die hydraulischen Verteilerblöcke (12,13) bestimmten Außenabmessungen der Spritzgießmaschine nur geringfügig überragt.

10. Spritzgießmaschine nach einem der vorhergehenden Patentansprüche, dadurch gekennzeichnet, daß die Abdeckung (11a) des Maschinenfußes (11), der Schaltschrank (15) und der Motor (21) der Spritzgießmaschine durch eine gemeinsame vertikale, die Spritzgießmaschine abschließende Ebene begrenzt sind.

## Claims

1. Plastics material injection moulding machine (injection moulding machine), including a machine base (11) which is provided with a cover (11a) and on which are disposed a horizontally closing mould securing unit (17) and an injecting unit (18), including a manual control panel (20) for direct control operations, including an input unit (E), which comprises a data display device (16) and an input keyboard (19), on the operator's side of the injection moulding machine, which is connected to a control cabinet (15) through the intermediary of at least one cable, the input unit (E) being directly accessible and inspectable from the operating position, and the control cabinet (15) being disposed on the rear end of the injection moulding machine, characterised in that, when the data display device lies substantially at eye level, the input unit (E), supported on the machine base, is displaceable about a vertical axis from a position of use, in which it is situated outwardly of the cover (11a) of the machine base (11), into a position of rest substantially above the machine base (11) and extends vertically on a horizontal swivel arm (33) pivotable about this axis; and the control cabinet is securedly connected to the machine base, the underside (15b) of the control cabinet (15) lying substantially in the plane which is formed by the cover (11a) of the machine base (11), and the control cabinet lying substantially inwardly of the external dimensions of the injection moulding machine.

2. Injection moulding machine according to claim 1, characterised in that the input unit (E) is also in its position of rest outwardly of the supporting face of the machine base.

3. Injection moulding machine according to claim 1 or 2, characterised in that the width of the input unit (E) corresponds approximately to the width of the display screen (16a) of the data display device (16).

4. Injection moulding machine according to one of the preceding claims, characterised in that the input keyboard (19), which is in its position of rest, is disposed parallel to the manual control panel (20) which is disposed in the region of the stationary mould carrier (25), and in that the manual control panel (20) and the input unit (E), in their positions of rest, are disposed parallel to the plane of symmetry (s-s) of the injection moulding unit (18).

5. Injection moulding machine according to one of the preceding claims, characterised in that, when the input unit (E) is in its position of rest, the top edge (16c) of the antiglare device (16b) of the display screen (16a) of the data display device (16) lies substantially in the vertical plane formed by the protective sliders (17a) on the operator's side of the mould securing unit (17).

6. Injection moulding machine according to one of the preceding claims, characterised in that the input unit (E), in its position of use, is disposed perpendicular to the plane of symmetry (s-s) of the injecting unit (18), the end face (31) at the injection moulding end of the pivotable input unit (E) lying substantially in the vertical plane formed by the protective sliders (17a) at the operator's side of the mould securing unit (17).

7. Injection moulding machine according to one of the preceding claims, characterised in that the vertically extending, pivotable input unit (E) is supported on the longitudinal wall (11b) through the intermediary of a connecting means (32) at the termination of said wall at the operator's side, and in that the swivel arm (33) is connected to the connecting means (32) through the intermediary of a hinge (27), which is disposed over the cover (11a) of the machine base (11) and is in the form of a pin, which pin forms the rotary axis.

8. Injection moulding machine according to claim 7, characterised in that a vertical spacing is provided between the input unit (E) and the swivel arm (33), which supports the pivotable input unit (E).

9. Injection moulding machine according to one of the preceding claims, characterised in that the underside (15b) of the control cabinet (15), which is mounted above the hydraulic distributor blocks (12, 13) by means of two holders (26), lies on a level with the cover (11a) of the machine base (11), and in that the control cabinet (15) is disposed at a spacing from the rear longitudinal wall (11c) of the machine base (11) parallel to the plane of symmetry (s-s) of the injecting unit (18) and protrudes only slightly beyond the external dimensions of the injection moulding machine determined by the hydraulic distributor blocks (12, 13).

10. Injection moulding machine according to one of the preceding claims, characterised in that the cover (11a) of the machine base (11), the control cabinet (15) and the motor (21) of the injection moulding machine are defined by a common, vertical plane terminating the injection moulding machine.

## Revendications

1. Machine à injection de matières plastiques (machine à mouler par injection), comprenant un socle de machine (11), muni d'un recouvrement (11a), sur lequel sont disposées une unité de fermeture de moule (17), fermant horizontalement, et une unité de moulage par injection (18),
un panneau de commande manuelle (20) pour des interventions de commande directes,
une unité d'entrée (E) composée d'un visuel (16) et d'un clavier d'introduction (19) et disposée côté commande de la machine à mouler par injection, qui est reliée par au moins un câble à une armoire électrique (15), l'unité d'entrée (E) étant accessible directement et visible pour la lecture à partir du poste de commande et l'armoire électrique (15) étant placée sur le côté arrière de la machine à mouler par injection,
caractérisée en ce que l'unité d'entrée (E), dont le visuel est situé à peu près à la hauteur des yeux, peut être amenée autour d'un axe vertical appuyé sur le socle de la machine, à partir d'une position d'utilisation à laquelle elle se trouve en dehors du recouvrement (11a) du socle (11) de la machine, à une position de repos où elle est située essentiellement au-dessus de ce socle (11), l'unité d'entrée (E) étant disposée debout sur un bras horizontal pivotant (33) de cet axe, et l'armoire électrique est reliée de façon fixe au socle de la machine, le côté inférieur (15b) de l'armoire électrique (15) étant situé à peu près dans le plan formé par le recouvrement (11a) du socle (11) de la machine et l'armoire électrique étant située pour l'essentiel à l'intérieur des dimensions hors tout de la machine à mouler par injection.

2. Machine à mouler par injection selon la revendication 1, caractérisée en ce que l'unité d'entrée (E) se trouve, également à la position de repos, en dehors de la surface d'appui du socle de la machine.

3. Machine à mouler par injection selon la revendication 1 ou 2, caractérisée en ce que la largeur de l'unité d'entrée (E) correspond approximativement à la largeur de l'écran (16a) du visuel (16).

4. Machine à mouler par injection selon une des revendications précédentes, caractérisée en ce que le clavier d'introduction (19) à la position de repos est disposé parallèlement au panneau de commande manuelle (20) placé dans la zone du porte-moule stationnaire (25), et que le panneau de commande manuelle (20) et l'unité d'entrée (E) à la position de repos sont disposés parallèlement au plan de symétrie (s-s) de l'unité de moulage par injection (18).

5. Machine à mouler par injection selon une des revendications précédentes, caractérisée en ce que le bord supérieur (16c) de l'auvent d'éclairage (16b) prévu sur l'écran (16a) du visuel (16) est situé à peu près, lorsque l'unité d'entrée (E) occupe la position de repos, dans le plan vertical formé par les portes de protection coulissantes (17a) côté commande de l'unité de fermeture de moule (17)

6. Machine à mouler par injection selon une des revendications précédentes, caractérisée en ce que l'unité d'entrée (E), lorsqu'elle occupe la position d'utilisation, est disposée perpendiculaire au plan de symétrie (s-s) de l'unité de moulage par injection (18), la face terminale (31) côté moulage par injection de l'unité d'entrée pivotante (E) étant située à peu près dans le plan vertical formé par les portes de protection coulissantes (17a) côté commande de l'unité de fermeture de moule (17).

7. Machine à mouler par injection selon une des revendications précédentes, caractérisée en ce que l'unité d'entrée pivotante (E), disposée debout, est appuyée sur la paroi longitudinale (11b) côté commande, à la fin de cette paroi, par l'intermédiaire d'une pièce de liaison (32), et que le bras pivotant (33) est relié à la pièce de liaison (32) par une articulation (27) disposée au-dessus du recouvrement (11a) du socle (11) de la machine et réalisée sous la forme d'un pivot, lequel forme l'axe de rotation.

8. Machine à mouler par injection selon la revendication 7, caractérisée en ce qu'une distance verticale est prévue entre l'unité d'entrée (E) et le bras pivotant (33) supportant cette unité.

9. Machine à mouler par injection selon une des revendications précédentes, caractérisée en ce que le côté inférieur (15b) de l'armoire électrique (15), fixée au moyen de deux consoles (26) au-dessus des blocs de distribution hydraulique (12, 13), se trouve à la hauteur du recouvrement (11a) du socle (11) de la machine et que l'armoire électrique (15) est disposée à distance par rapport à la paroi longitudinale arrière (11c) du socle (11), parallèlement au plan de symétrie (s-s) de l'unité de moulage par injection (18), et dépasse de peu seulement les dimensions hors tout de la machine à mouler par injection, fixées par les blocs de distribution hydraulique (12, 13).

10. Machine à mouler par injection selon une des revendications précédentes, caractérisée en ce que le recouvrement (11a) du socle (11) de la machine, l'armoire électrique (15) et le moteur (21) de la machine à mouler par injection sont délimités par un plan vertical commun définissant une extrémité de la machine à mouler par injection.
